Europäisches Patentamt

**European Patent Office**

Office européen des brevets

(11) Numéro de publication : **0 073 776**
**B1**

(12)

# FASCICULE DE BREVET EUROPÉEN

(45) Date de publication du fascicule du brevet :
22.10.86

(51) Int. Cl.⁴ : **H 02 J 13/00**

(21) Numéro de dépôt : **82900620.4**

(22) Date de dépôt : **15.03.82**

(86) Numéro de dépôt international :
**PCT/CH 82/00038**

(87) Numéro de publication internationale :
**WO/8203299 (30.09.82 Gazette 82/23)**

(54) **INSTALLATION DE SIGNALISATION ELECTRIQUE COMPRENANT AU MOINS UN EMETTEUR ET UN RECEPTEUR.**

(30) Priorité : 16.03.81 CH 1757/81

(43) Date de publication de la demande :
16.03.83 Bulletin 83/11

(45) Mention de la délivrance du brevet :
22.10.86 Bulletin 86/43

(84) Etats contractants désignés :
**AT BE DE FR GB NL SE**

(56) Documents cités :
**DE-A- 2 832 942**
**FR-A- 2 119 154**
**FR-A- 2 144 400**
**US-A- 3 002 147**
**US-A- 3 482 212**
**US-A- 3 558 902**
**US-A- 3 659 280**
**US-A- 3 909 618**

(73) Titulaire : **TRANSEC S.A.**
**29 Rue de Neuchâtel**
**CH-1201 Genève (CH)**

(72) Inventeur : **LECHNER, Heinz**
**Ch. de la Broye, 9**
**CH-1020 Renens (CH)**
Inventeur : **TAILLENS, Jean-François**

**CH-1049 Sullens (CH)**

(74) Mandataire : **Ardin, Pierre et al**
**PIERRE ARDIN & CIE 22, rue du Mont-Blanc**
**CH-1211 Genève 1 (CH)**

## Description

On connaît déjà une installation de transmission d'un signal électrique du genre utilisant un réseau de transmission d'énergie électrique et comprenant au moins un émetteur émettant sur le réseau une fréquence porteuse modulée en amplitude et au moins un récepteur comprenant un circuit accordé sur la fréquence porteuse et un démodulateur.

Une installation de ce genre est par exemple décrite dans le brevet US-A-3 909 618.

US-A-3 482 212 décrit une installation de transmission d'un signal électrique utilisant un réseau de distribution d'énergie électrique, cette installation comprenant au moins un émetteur et un récepteur destinés à être reliés à ce réseau. La transmission de l'émetteur au récepteur se fait au moyen d'une onde porteuse modulée en fréquence, le récepteur comprenant un circuit accordé sur la fréquence de l'onde porteuse et un démodulateur suivi d'un filtre à diapason accordé sur la fréquence de modulation. La sortie de ce filtre est reliée à un intégrateur suivi d'un élément réagissant dès que le signal de sortie de l'intégrateur atteint un niveau prédéterminé.

Le brevet français FR-A-2 119 154 se rapporte à un dispositif de télécommande dans lequel l'émetteur est relié à un récepteur par une ligne téléphonique ordinaire, l'émetteur produisant au moins deux basses fréquences situées dans la bande passante de la ligne téléphonique. Le récepteur comprend un filtre pour chaque fréquence à recevoir, suivi d'un temporisateur fournissant un signal en sortie lorsqu'il est alimenté pendant un intervalle de temps prédéterminé. Les sorties des temporisateurs sont transmises à une porte ET qui délivre le signal de commande.

L'invention a pour but d'offrir une installation du genre indiqué ayant un fonctionnement très sûr et présentant une grande insensibilité aux parasites.

A cet effet, l'installation selon l'invention est caractérisée en ce que l'émetteur comprend un oscillateur à très basse fréquence commandant la modulation de l'onde porteuse par au moins deux fréquences différentes produites par au moins deux oscillateurs basse fréquence dont la fréquence est contrôlée pour chacun par un diapason, le récepteur comprenant au moins deux filtres à diapason recevant chacun le signal démodulé, chacun de ces filtres étant accordé sur une des fréquences des oscillateurs basse fréquence et étant relié à une entrée d'un intégrateur fournissant en sortie un signal lorsqu'un signal est présent à son entrée pendant un temps prédéterminé, les sorties des intégrateurs étant branchées sur une porte ET délivrant le signal de sortie du récepteur.

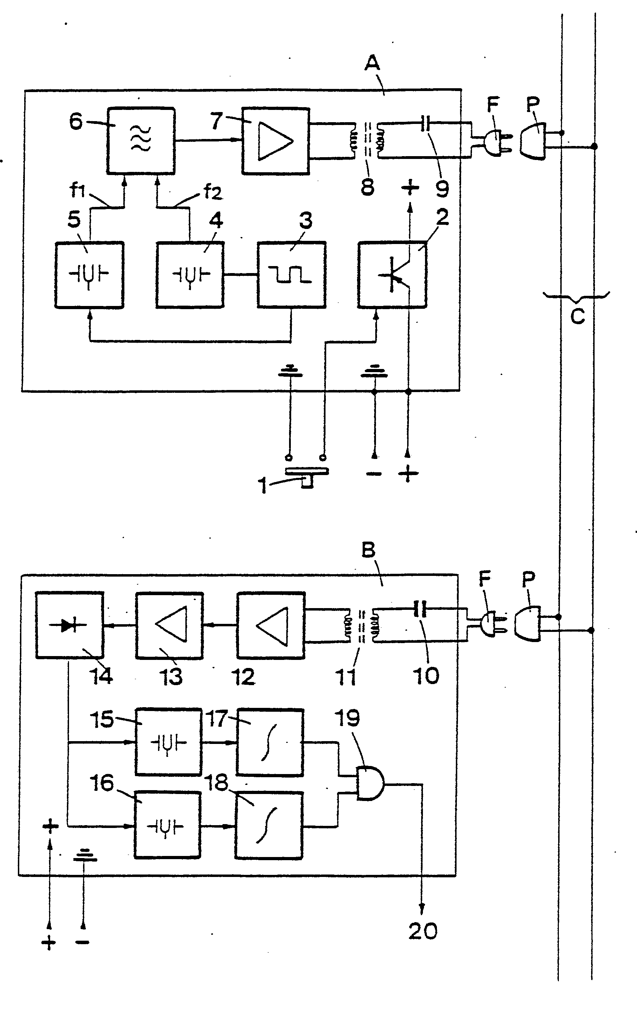

La figure unique du dessin annexé représente schématiquement et à titre d'exemple une forme d'exécution de l'installation faisant l'objet de l'invention.

Le dessin montre le schéma bloc d'un émetteur A et d'un récepteur B qui sont reliés l'un à l'autre par l'intermédiaire de deux conducteurs appartenant à un réseau d'alimentation à courant alternatif monophasé.

La connexion à ce réseau d'alimentation est faite par l'intermédiaire de fiches F engagées dans des prises P.

Cette disposition permet de placer l'émetteur A dans un lieu quelconque où se trouve une prise d'alimentation et le récepteur dans un autre lieu où une prise d'alimentation du même réseau est également à disposition.

L'émetteur A comprend une source d'alimentation non représentée, pouvant être constituée par une pile sèche ou par un redresseur alimenté à partir du réseau sur lequel est placé l'appareil.

Il comprend également un contact 1 destiné à la mise en marche de l'émetteur pour lui faire envoyer un signal sur les conducteurs C du réseau électrique.

La manœuvre du contact 1 rend conducteur un circuit temporisateur 2 qui relie pendant un temps déterminé, par exemple de 5 à 10 secondes, la source d'alimentation aux diverses unités que comprend cet émetteur.

Ces unités consistent principalement en un oscillateur 3 fournissant un signal rectangulaire d'une fréquence de 1 Hz, ce signal faisant fonctionner alternativement deux oscillateurs 4 et 5, dont la fréquence est contrôlée pour chacun par un diapason.

Ces deux oscillateurs 4 et 5 sont bien entendu réglés sur deux fréquences différentes qui peuvent avantageusement être comprises entre 1 et 5 kHz.

Les signaux de sortie des oscillateurs 4 et 5, de fréquences f1 et f2 sont appliqués comme signaux modulateurs à un oscillateur 6 générant une fréquence porteuse, par exemple de l'ordre de quelques dizaines de kHz.

La sortie de l'oscillateur 6 est un signal fs modulé en amplitude qui est appliqué à un amplificateur de puissance 7.

Le signal de sortie de l'amplificateur 7 est appliqué aux conducteurs C par l'intermédiaire d'un transformateur à haute fréquence 8 et d'un condensateur 9 qui doit bien entendu résister à la tension pointe du réseau.

Le récepteur B comprend également une source d'alimentation du même genre que celle de l'émetteur A.

Ce récepteur, qui est relié au réseau par la fiche F reçoit le signal de l'émetteur par l'intermédiaire d'un condensateur 10 et d'un transformateur à haute fréquence 11.

Ces deux éléments constituent un filtre élémentaire passe-haut atténuant très fortement la fréquence du réseau.

Le signal reçu passe successivement dans deux amplificateurs 12 et 13, le premier ayant une fonction d'écrêteur, ces deux amplificateurs étant accordés sur la fréquence de l'onde porteuse.

Après amplification le signal parvient à un démodulateur 14 et le signal BF démodulé est appliqué à deux filtres à diapason 15 et 16.

Les signaux de sortie de ces filtres agissent sur deux intégrateurs 17 et 18 dont les sorties sont branchées sur une porte ET 19.

Le signal de sortie de ces portes peut être utilisé pour actionner un dispositif quelconque non représenté, par exemple un dispositif d'alarme lumineux ou acoustique ou encore un relais de commande d'un dispositif quelconque.

L'installation décrite est d'un fonctionnement très sûr et sa grande insensibilité aux tensions parasites permet de la faire fonctionner avec des signaux très faibles, par exemple de l'ordre de quelques millivolts.

Ces avantages sont dus principalement aux deux intégrateurs 17 et 18 qui ne fournissent un signal de sortie que lorsque la modulation traversant les filtres 15 et 16 a duré un temps déterminé.

Les filtres 15 et 16 étant à diapason constituent eux aussi un intégrateur mécanique, car il faut que l'excitation dure un temps déterminé, avant que leur signal de sortie atteigne le niveau désiré pour agir sur les intégrateurs électriques 17 et 18.

Comme les parasites que l'on rencontre sur un réseau peuvent atteindre des valeurs élevées, mais sont généralement de très courte durée, ils sont insuffisants pour provoquer l'émission d'un signal de sortie des intégrateurs 17 et 18.

D'autre part, l'oscillateur 3 fait fonctionner les deux oscillateurs à diapason 4 et 5 alternativement, de sorte que la modulation de l'onde porteuse est constituée par une succession de fréquences sonores pures, ce qui permet d'éviter la production de fréquences additionnelles par battements.

Il est clair que le fait de prévoir deux fréquences de modulation augmente beaucoup la sûreté de fonctionnement de l'installation et diminue d'autant le risque d'interférence avec d'autres installations du même type.

Si de nombreuses installations de ce genre devaient être placées sur un même réseau, on pourrait avoir avantage à prévoir plus de deux fréquences de modulation.

Toutefois, comme le récepteur ne réagit que lors de la présence de deux fréquences de modulation déterminées, il est possible de réaliser une grande quantité de combinaisons différentes des dites fréquences pour obtenir des ensembles émetteur-récepteur pouvant travailler indépendamment les uns des autres.

L'installation décrite offre de nombreuses possibilités d'utilisation. Par exemple l'émetteur peut être combiné avec une cellule sensible aux rayons infrarouges, de façon à pouvoir être enclenché par une personne agissant sur un émetteur portatif produisant un rayonnement d'appel codé à rayons infrarouges.

Une telle utilisation est intéressante notamment pour les personnes âgées ou handicapées qui peuvent ainsi avertir une autre personne habitant le même immeuble ou à proximité.

Bien entendu, il est avantageux que le récepteur soit muni d'un dispositif avertisseur optique ou sonore, cet avertisseur restant en fonction lorsqu'il a été déclenché et jusqu'à ce que la personne avertie le remette en position de repos.

On peut bien entendu prévoir de nombreuses autres utilisations, par exemple la télécommande pour agir sur l'éclairage de locaux, l'ouverture et la fermeture de portes.

On peut aussi prévoir une alarme déclenchée par un détecteur d'incendie, d'infraction, de fumée ou autres anomalies.

Grâce à la grande sensibilité de l'installation, il est en principe possible de placer l'émetteur et le récepteur sur des phases différentes du même réseau, le signal se transmettant d'une phase à l'autre, par suite des dissymétries du réseau, ainsi que par couplage capacitif et inductif.

**Revendications**

1. Installation de transmission d'un signal électrique utilisant un réseau de transmission d'énergie électrique et comprenant au moins un émetteur (A) émettant sur le réseau une fréquence porteuse modulée en amplitude et au moins un récepteur (B) comprenant un circuit accordé sur la fréquence porteuse (10-13) et un démodulateur (14), caractérisée en ce que l'émetteur (A) comprend un oscillateur à très basse fréquence (3) commandant la modulation de l'onde porteuse par au moins deux fréquences différentes produites par au moins deux oscillateurs basse fréquence (4, 5) dont la fréquence est contrôlée pour chacun par un diapason, le récepteur (B) comprenant au moins deux filtres à diapason (15, 16) recevant chacun le signal démodulé, chacun de ces filtres (15, 16) étant accordé sur une des fréquences des oscillateurs basse fréquence (4, 5) et étant relié à une entrée d'un intégrateur (17, 18) fournissant en sortie un signal lorsqu'un signal est présent à son entrée pendant un temps prédéterminé, les sorties des intégrateurs (17, 18) étant branchées sur une porte ET (19) délivrant le signal de sortie du récepteur.

2. Installation selon la revendication 1, caractérisée en ce que l'oscillateur commande alternativement et successivement la modulation de l'onde porteuse par deux basses fréquences.

3. Installation selon la revendication 2, caractérisée en ce que la très basse fréquence est de l'ordre de 1 Hz.

4. Installation selon la revendication 1, caractérisée en ce que l'émetteur comprend une source d'alimentation telle qu'une pile sèche et un circuit temporisateur (2) répondant à la fermeture d'un contact et destinés à relier la source d'alimentation aux diverses unités de l'émetteur pendant un temps déterminé.

**Claims**

1. Electrical signalling installation using an electrical power distribution network and comprising at least one transmitter (A) transmitting an amplitude modulated carrier frequency wave over the network and at least one receiver (B) comprising a circuit tuned to the carrier frequency (10-13) and a demodulator (14), characterized in that the transmitter (A) comprises a very low frequency oscillator (3) controlling the modulation of the carrier wave by at least two different frequencies produced by at least two different frequencies produced by at least two low frequency oscillators (4, 5), the frequency of each of which is controlled by a tuning fork, the receiver (B) comprising at least two tuning fork filters (15, 16), each of these filters (15, 16) being tuned to one of the frequencies of the low frequency oscillators (4, 5) and being connected to the lead-in of an integrator (17, 18) supplying an output signal when a signal is present at its lead-in during a predetermined time, the outputs of the integrators (17, 18) being connected to an AND circuit (19) that delivers the output signal of the receiver.

2. Installation according to claim 1, characterized in that the oscillator controls alternatively and successively the modulation of the carrier wave by two low frequencies.

3. Installation according to claim 2, characterized in that the very low frequency is of the order of 1 Hz.

4. Installation according to claim 1, characterized in that the transmitter comprises a supply source, such as a dry cell, and a delay circuit (2) responding to the closing of a switch and destinated to connect the supply source to the different units of the transmitter during a predetermined time.

**Patentansprüche**

1. Einrichtung zur Übertragung eines elektrischen Signals unter Verwendung eines Übertragungsnetzes elektrischer Energie, welche Einrichtung wenigstens einen Sender (A), der in das Netz eine amplitudenmodulierte Trägerfrequenz aussendet, und wenigstens einen Empfänger (B) umfaßt, der einen auf die Trägerfrequenz (10-13) abgestimmten Schaltkreis und einen Demodulator (14) enthält, dadurch gekennzeichnet, daß der Sender (A) einen Oszillator (3) mit sehr niederer Frequenz umfaßt, der die Modulation der Trägerfrequenz mit zwei verschiedenen Frequenzen, erzeugt von wenigstens zwei Niederfrequenzoszillatoren (4, 5), steuert, deren Frequenz jeweils von einer Stimmgabel kontrolliert wird, der Empfänger (B) wenigstens zwei Stimmgabelfilter (15, 16) aufweist, von denen jedes das demodulierte Signal empfängt, jedes dieser Filter (15, 16) auf eine der Frequenzen der Niederfrequenzoszillatoren (4, 5) abgestimmt und mit dem Eingang eines Integrators (17, 18) verbunden ist, der ein Ausgangssignal liefert, wenn ein Signal an seinem Eingang während einer vorgegebenen Zeit ansteht, und die Ausgänge der Integratoren (17, 18) an ein UND-Gatter (19) angeschlossen sind, welches das Ausgangssignal des Empfängers liefert.

2. Einrichtung nach Anspruch 1, dadurch gekennzeichnet, daß der Oszillator abwechselnd und aufeinanderfolgend die Modulation der Trägerwelle mit zwei Niederfrequenzen steuert.

3. Einrichtung nach Anspruch 2, dadurch gekennzeichnet, daß die sehr niedere Frequenz in der Größenordnung von 1 Hz liegt.

4. Einrichtung nach Anspruch 1, dadurch gekennzeichnet, daß der Sender eine Stromversorgung, beispielsweise eine Trockenbatterie, und eine Verzögerungsschaltung (2) aufweist, die auf das Schließen eines Kontaktes anspricht und dazu bestimmt ist, die Stromversorgung an die verschiedenen Einheiten des Senders während einer vorgegebenen Zeit anzuschalten.